# EUROPEAN PATENT APPLICATION

(11) **EP 4 563 407 A1**
(43) Date of publication of application: **04.06.2025**
(21) Application number: 24216592.6
(22) Date of filing: 29.11.2024
(51) Int. Cl.: B60N 2/28

(54) **SEAT CUSHION STRUCTURE AND CHILD SAFETY SEAT**

(30) Priority: 01.12.2023 CN 202311649863; 29.12.2023 CN 202311870098
(71) Applicant: Wonderland Switzerland AG, 6312 Steinhausen (CH)
(72) Inventor: ZHANG, Daliang, Dongguan, Guangdong, 523648 (CN); LI, Ruyi, Dongguan, Guangdong, 523648 (CN)
(74) Representative: Lucke, Andreas

(57) **Abstract**

A seat cushion structure (200) and a child safety seat (10) are provided. The seat cushion structure (200) is applicable to a seat body (12) of the child safety seat (10). The seat cushion structure (200) includes: a back cushion (210) configured to support a back of a child and having a first surface (211) configured to face the child and a second surface (212) opposite to the first surface (211); and a seat cushion (220) configured to support a hip of the child. The back cushion (210) is provided with a pushing portion (215), and the pushing portion (215) makes the first surface (211) of the back cushion (210) push the back of the child, allowing the back and the head of the child tend to be in a same straight line; and/or the seat cushion (220) is provided with a blocking portion (226) configured to block the child from sliding down. The seat cushion structure (200) according to the present disclosure can provide efficient and safe support for the child, make the child's head and body keep a stretched state, and avoid danger caused by the child's head bending toward the child's body, to provide the child with safe support.

## Description

### TECHNICAL FIELD

The present disclosure relates to a seat cushion structure and a child safety seat including the seat cushion structure.

### BACKGROUND

A child safety seat is a device specifically designed for children, which can reduce impact on a child that is restrained in the safety seat during a car riding in the event of a car collision or sudden deceleration, thereby decreasing injuries to the child and effectively improving the riding safety of the child.

For children who are younger or have a smaller body size, a seat cushion structure is often added to the safety seat, to further support the child's body and improve comfort and safety.

However, there are irrationalities in the design of existing seat cushion structures, so that the child's body is prone to sliding down during the riding, causing the child's head to separate from safety protection of a headrest unit. Moreover, due to an unreasonable angle design of the existing seat cushion structures, the child's head may bend toward the body when sliding occurs, and there is a risk of suffocation when the child's chin touches the child's chest for a long time. Consequently, the existing seat cushion structures cannot provide comfortable, reliable, and safe support for children.

### SUMMARY

Accordingly, the present disclosure aims to provide a reliable and safe seat cushion structure and a child safety seat including the seat cushion structure.

To this end, according to a technical solution of the present disclosure, a seat cushion structure is provided and applicable to a seat body of a child safety seat. The seat cushion structure includes: a back cushion configured to support a back of a child, the back cushion having a first surface and a second surface opposite to the first surface, the first surface configured to face the child; and a seat cushion configured to support a hip of the child. The back cushion is provided with a pushing portion, and the pushing portion makes the first surface of the back cushion push the back of the child, allowing the back and the head of the child tend to be in a same straight line; and/or the seat cushion is provided with a blocking portion configured to block the child from sliding down.

According to an embodiment, the pushing portion is on the first surface or the second surface of the back cushion, and an outer surface of the pushing portion forms at least a part of the first surface of the back cushion or at least a part of the second surface of the back cushion.

According to an embodiment, the back cushion is integrally made with the pushing portion, and an outer surface of the pushing portion forms at least a part of the second surface of the back cushion.

According to an embodiment, the pushing portion is configured as a protrusion protruding in a direction away from the first surface of the seat cushion.

According to an embodiment, the pushing portion increases a material thickness of the back cushion at the pushing portion, causing the pushing portion to exhibit a raised shape; or the back cushion has a constant material thickness but is curved and bulged to form a raised shape at the pushing portion.

According to an embodiment, the back cushion has a first end and a second end along an up-down direction, and the first end of the back cushion is away from the seat cushion relative to the second end of the back cushion; the back cushion has a first thickness at the first end, a second thickness at the second end, and a third thickness at the pushing portion, the third thickness being greater than the second thickness.

According to an embodiment, the third thickness is greater than the first thickness.

According to an embodiment, the pushing portion is in a middle position between the first end and the second end of the back cushion, and extends at least a part of a left-right width of the back cushion along a left-right direction of the back cushion.

According to an embodiment, the back cushion is provided with a ventilation hole extending from the first surface to the second surface of the back cushion.

According to an embodiment, the seat cushion has a first end and a second end opposite to the first end; the first end of the seat cushion is connected to a second end of the back cushion through an arc-shaped transition; and the second end of the seat cushion extends forward and upward.

According to an embodiment, the seat cushion and the back cushion are integrally made.

According to an embodiment, the seat cushion has a first surface and a second surface opposite to the first surface, and the first surface of the seat cushion is configured to face the child; and the first surface of the seat cushion includes an arc segment connected to the second end of the back cushion and a straight segment connected to the arc segment.

According to an embodiment, the seat cushion has a first surface and a second surface opposite to the first surface, and the first surface of the seat cushion is configured to face the child; and the first surface of the seat cushion and the second surface of the seat cushion are inclined forward and upward, and a distance between the first surface of the seat cushion and the second surface of the seat cushion gradually increases in a forward and upward direction.

According to an embodiment, a first angle is formed between a connection line of the first surface of the seat cushion and a connection line of the second surface of the seat cushion, and the first angle is not less than 8° and not greater than 25°.

According to an embodiment, the first angle is 11°.

According to an embodiment, the seat cushion has a first surface and a second surface opposite to the first surface, and the first surface of the seat cushion is configured to face the child; and a second angle is formed between a connection line of the first surface of the back cushion and a connection line of the first surface of the seat cushion, and the second angle is not less than 101° and not greater than 110°.

According to an embodiment, the second angle is 105°.

According to an embodiment, the seat cushion also has a third surface at the second end of the seat cushion, and the third surface connects the first surface of the seat cushion with the second surface of the seat cushion.

According to an embodiment, the second surface of the seat cushion extends forward and upward beyond the first surface, and the third surface is connected to the first surface through an arc-shaped transition.

According to an embodiment, the blocking portion is in the form of a protrusion extending forward and upward, and an outer surface of the blocking portion forms at least a part of the first surface of the seat cushion and forms the third surface of the seat cushion.

According to an embodiment, a thickness of the back cushion at the second end is a second thickness, and a thickness between an end of the straight segment close to the arc segment and a second surface of the seat cushion is a fourth thickness, which is greater than the second thickness.

According to an embodiment, a thickness between the first surface of the seat cushion and the second surface of the seat cushion and adjacent to the third surface of the seat cushion is a fifth thickness, which is greater than the fourth thickness.

According to an embodiment, the seat cushion is provided with an avoidance portion configured to avoid a crotch belt assembly arranged on a seating portion of the seat body.

According to an embodiment, the avoidance portion is in the form of an avoidance notch recessed rearward from the third surface of the seat cushion, and the avoidance notch has an avoidance portion limiting surface. The avoidance portion limiting surface is perpendicular to the second surface of the seat cushion or extends obliquely from front to rear and from top to bottom relative to the second surface of the seat cushion.

According to another aspect of the present disclosure, a child safety seat is provided, including a seat body and a support structure arranged on the seat body. The support structure includes: a headrest configured to support a head of a child; and the seat cushion structure described above.

According to an embodiment, the headrest has a first end and a second end in an upper and down direction, and the first end of the headrest is away from the seat cushion structure relative to the second end of the headrest. An upper protrusion is provided at the first end of the headrest; and/or a side protrusion is provided at each of left and right sides of the headrest.

According to an embodiment, the headrest has a first surface and a second surface opposite to the first surface, and the first surface is configured to face the child; a transition portion is provided at the second end of the headrest and is bent downwardly toward the second surface of the headrest relative to other portions of the headrest.

According to an embodiment, a thickness of the headrest at the transition portion is a sixth thickness, which is less than a first thickness of the back cushion at a first end of the back cushion away from the seat cushion.

According to an embodiment, when a bottom of the seat body is placed on a horizontal plane, a third angle is formed between a second surface of the seat cushion and the horizontal plane and is not less than 25° and not greater than 55°.

According to an embodiment, the third angle is 40°.

According to still another aspect of the present disclosure, a child safety seat is provided, including a seat body; and a seat cushion structure, removably arranged on the seat body and including a back cushion and a seat cushion, the seat cushion having a first surface configured to face a child. When a bottom of the seat body is placed on a horizontal plane, a fourth angle is formed between a first surface of the seat cushion and the horizontal plane and is not less than 33° and not greater than 80°.

According to an embodiment, the fourth angle is not less than 36° and not greater than 70°.

According to an embodiment, the fourth angle is 51°.

The seat cushion structure according to the present disclosure can effectively prevent the child sitting thereon from losing protection of the headrest due to downward sliding of the child's body, and can provide effective and safe support for the child, so that the head and body of the child are in a straight line, avoiding danger caused by the child's head bending toward the child's body, to provide reliable and safe support for the child.

### BRIEF DESCRIPTION OF THE DRAWINGS

The accompanying drawings are included herein to provide further understanding of the present disclosure, and are incorporated into and constitute a part of this specification. The drawings illustrate embodiments of the present disclosure and, together with the following description, serve to explain principles of the present disclosure.

In the drawings:
FIG. 1 is a schematic view of a child safety seat according to the present disclosure;
FIG. 2 illustrates a side view and a partially enlarged view of a support structure according to the present disclosure;
FIG. 3 is a schematic view of a seat cushion structure according to the present disclosure;
FIG. 4 is a side view of a seat cushion structure according to the present disclosure;
FIG. 5 is a side sectional view of a seat cushion structure according to the present disclosure;
FIG. 6 is a partially side view of a seat cushion according to the present disclosure;
FIG. 7 is a partially sectional view of another embodiment of an avoidance portion according to the present disclosure.
FIG. 8 is a schematic view of a seat cushion structure according to a comparative embodiment; and
FIG. 9 is a schematic view of a support structure according to a comparative embodiment.

Reference numerals:
Child safety seats: 10
   Seat body 12
      Plastic body 12a, Foam body 12b
   Handle 14
   Crotch belt assembly 16
Support structure: 20, 20'
   Headrest 100, 100'
      First end 110
         Upper protrusion 112, Side protrusion 113
      Second end 120
         Transition portion 122
      First surface 130
      Second surface 140
   Seat cushion structure 200, 200'
      Back cushion 210
         First surface 211, Second surface 212, First end 213
         Second end 214, Pushing portion 215, Ventilation hole 216
      Seat cushion 220
         First surface 221, Second surface 222, Third surface 227
         Arc segment 221a, Straight segment 221b
         First end 223, Second end 224, Blocking portion 226
         Avoidance portion 225, Avoidance portion limiting surface 225a
   1: Midline of the child's body
β: First angle
α: Second angle
γ: Third angle
δ: Fourth angle
l: Straight Line
T1: First thickness
T2: Second thickness
T3: Third thickness
T4: Fourth thickness
T5: Fifth thickness
T6: Sixth thickness

### DETAILED DESCRIPTION

Exemplary embodiments will be described below in detail with reference to the accompanying drawings. Although the present disclosure is prone to various modifications and alternatives, specific embodiments are illustrated by way of example in the accompanying drawings. However, the present disclosure should not be construed as being limited to the embodiments set forth herein, but rather the present disclosure covers all modifications, equivalents, and alternatives that fall within the spirit and scope of the embodiments.

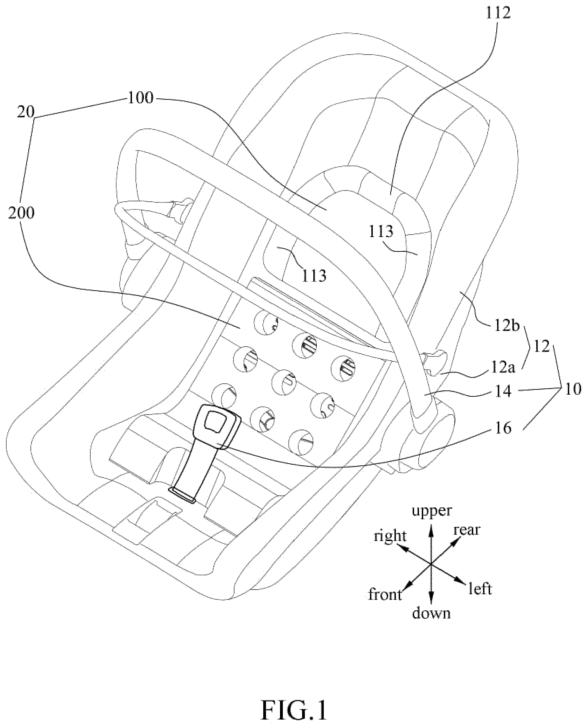

The following description is based on a child safety seat as an example, but a seat cushion structure and a support structure according to the present disclosure can also be applied to other children equipment that require support for children, such as child dining chairs and various types of strollers. Referring to FIG. 1, which is a schematic view of a child safety seat 10 according to the present disclosure, the child safety seat 10 may be mounted on a car seat and includes a seat body 12. The seat body 12 consists of two parts, namely, a plastic body 12a and a foam body 12b. The plastic body 12a forms a frame of the seat body 12, and the foam body 12b is at an inner side of the plastic body 12a to provide a passenger with a more comfortable seating space.

Referring to FIG. 1, the seat body 12 may be divided into a backrest and a seat. The child safety seat 10 is detachably mounted on the car seat. For portability, the child safety seat 10 typically includes a handle 14 that spans both end sides of the seat body 12 in a width direction. The child safety seat 10 as shown in FIG. 1 is in the form of a basket, which may be mounted on the car seat or the child stroller for use, or may be lifted for separate use. In addition, the child safety seat 10 also has a crotch belt assembly 16 that is connected to the seat of the seat body 12. The crotch belt assembly 16 includes a crotch belt and a buckle connected to the crotch belt. The child safety seat 10 also has a shoulder belt and/or a waist belt (not shown), and connectors (not shown) on the shoulder belt and the waist belt are also fastened to the buckle. In such a way, the crotch belt and the shoulder belt can form a three-point safety belt; or the crotch belt, the shoulder belt, and the waist belt can form a five-point safety belt.

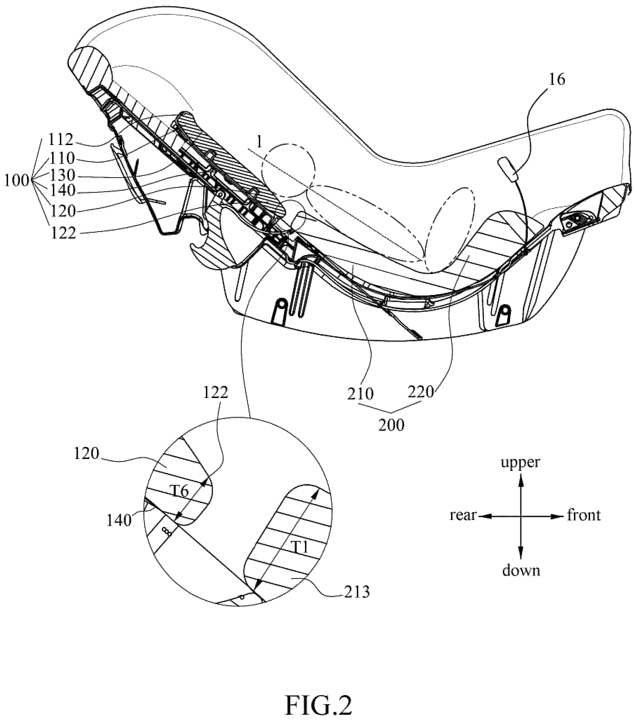

As shown in FIGS. 1 and 2, FIG. 2 illustrates a side view of a support structure 20 according to the present disclosure, and the child safety seat 10 includes the support structure 20. The support structure 20 includes a headrest 100 and a seat cushion structure 200. The headrest 100 is configured to support a child's head. The seat cushion structure 200 is detachably arranged on the seat body 12 of the child safety seat 10 and configured to support the child's back and hip. For a child who has a small body size, the seat cushion structure 200 may further support legs (e.g., thighs) of the child. The seat cushion structure 200 can provide better support for young and small-sized children. FIG. 2 also schematically illustrates that the child is supported by the support structure 20, with the head resting on the headrest 100 and the back and hip resting on the seat cushion structure 200, and the head and the back are substantially in a same straight line 1.

The headrest 100 is movable longitudinally along the backrest of the seat body 12 to adjust a height position of the headrest 100. The headrest 100 has a first surface 130 and a second surface 140 opposite to the first surface 130. The first surface 130 is configured to face the child's head. The headrest 100 has a first end 110 and a second end 120. The first end 110 of the headrest 100 is away from the seat cushion structure 200 relative to the second end 120 of the headrest. The second end 120 of the headrest 100 is close to the seat cushion structure 200 relative to the first end 110 of the headrest 100, and the first end 110 is provided with an upper protrusion 112. In an optional embodiment, a side protrusion 113 (as shown in FIG. 1) is provided at each of left and right sides of the headrest 100, and the upper protrusion 112 and the side protrusions 113 protrude outward relative to the first surface 130 of the headrest 100, to provide all-around protection for the child's head. A transition portion 122 is also provided at the second end 120 of the headrest 100 and is bent downwardly toward the second surface 140 relative to other portions of the headrest 100. A downward bent part of the transition portion 122 may be a downward arc segment, or may be a downward inclined surface, or may be other downward curved or bent segments.

As shown in FIGS. 1 and 2, the seat cushion structure 200 has a certain degree of hardness to provide sufficient support for children, and the seat cushion structure 200 may, for example, be made of PU foam or EVA foam. The seat cushion structure 200 may be arranged inside an outer cloth cover (not shown). For example, the outer cloth cover covers outside of the seat cushion structure 200, and the seat cushion structure is kept inside the outer cloth cover by a zipper, a Velcro tape, a buckle, a magnetic buckle, a loop or the like, facilitating replacement and cleaning of the outer cloth cover. The outer cloth cover is relatively soft and skin-friendly, and may be made of materials such as Uli fabric or knitted fabric.

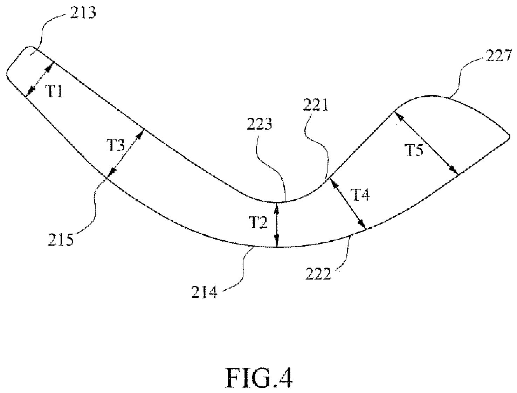

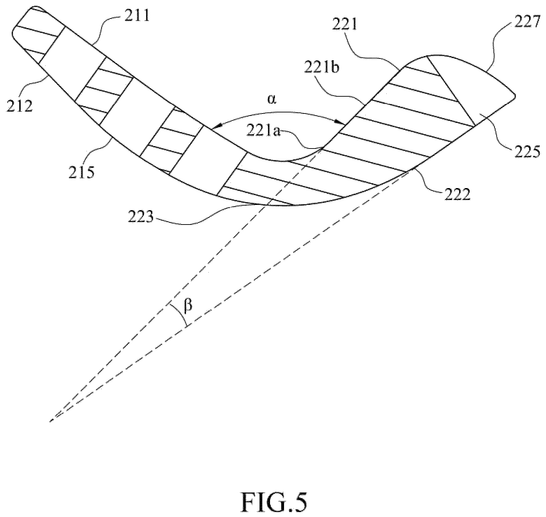

Referring to FIGS. 3, 4, and 5, FIG. 3 is a schematic view of the seat cushion structure 200 according to the present disclosure; FIG. 4 is a side view of the seat cushion structure 200 according to the present disclosure; and FIG. 5 shows a side sectional view of the seat cushion structure 200 according to the present disclosure. The seat cushion structure 200 includes a back cushion 210 and a seat cushion 220. The back cushion 210 supports the child's back, while the seat cushion 220 supports the child's hip or supports the child's hip and legs (such as thighs). The back cushion 210 has a first end 213 and a second end 214, and the first end 213 of the back cushion 210 is away from the seat cushion 220 relative to the second end 214 of the back cushion 210.

A first surface 211 of the back cushion 210 is a surface configured to face the child, and a second surface 212 of the back cushion 210 is a surface configured to face away from the child. At least one of the first surface 211 and the second surface 212 of the back cushion 210 is provided with a pushing portion 215. The pushing portion 215 can prop up the back cushion 210 after the seat cushion structure 200 is placed on the child safety seat 10, so that the child's back can be better propped up, and the head and back of the child can be relatively stretched, preventing the child's head from bending toward the child's back and affecting the child's breathing.

The pushing portion 215 may be in a middle area of the back cushion 210 in a length direction, or at other positions between the first end 213 of the back cushion 210 and the second end 214 of the back cushion 210. The pushing portion 215 extends at least a part of a left-right width of the back cushion 210 along a left-right direction of the back cushion 210.

In this embodiment, the pushing portion 215 is arranged at a side of the back cushion 210 facing away from the first surface 211, that is, the pushing portion 215 is at the second surface 212 of the back cushion 210, and an outer surface of the pushing portion 215 forms at least a part of the second surface 212 of the back cushion 210. Consequently, the pushing portion 215 can abut against the backrest of the child safety seat or the stroller, and meanwhile can prop up (push up) the first surface 211 of the back cushion 210 against the child's back. The pushing portion 215 according to this embodiment protrudes in an arc shape, so that the second surface 212 of the back cushion 210 overall has an arc shape, and an approximately middle part of the arc shape further protrudes toward the backrest of the child safety seat or the stroller. The back cushion 210 may be integrally made with the pushing portion 215, and the pushing portion 215 protrudes in a direction away from the first surface 211. The pushing portion 215 is certainly not limited to the arc shape mentioned above. The pushing portion in other forms, for example in the form of a bump, is also feasible as long as it can prop up the child's back and reduce an angle at which the child's head bends toward the child's body. In other embodiments, the pushing portion 215 may not be formed by integral made of the back cushion 210. For example, a base of the back cushion 210 and the pushing portion 215 are separately made, and then the pushing portion 215 is bonded to the base by gluing, clamping, or binding, such that the base and the pushing portion together form the back cushion 210.

It should be noted that in this embodiment, the pushing portion 215 is substantially distributed in the middle area of the second surface 212 of the back cushion 210, so that the outer surface of the pushing portion 215 forms a part of the second surface 212 of the back cushion 210. In other embodiments, the outer surface of the pushing portion 215 may form the entire second surface 212 of the back cushion 210. Alternatively, the pushing portion 215 is located at the first surface 211 of the back cushion 210, and the outer surface of the pushing portion 215 forms at least a part of the first surface 211 of the back cushion 210, which can prop up the first surface 211 of the back cushion 210 against the child's back.

FIG. 4 shows that the back cushion 210 has a first thickness T1 at the first end 213 and a second thickness T2 at the second end 214, while the back cushion 210 has a third thickness T3 at the pushing portion 215, in which the third thickness T3 is greater than the second thickness T2 and also greater than the first thickness T1.

It should be noted that the pushing portion 215 in this embodiment increases the material thickness of the back cushion 210 at the pushing portion 215, causing the pushing portion 215 to exhibit a raised shape, so that the first surface 211 of the back cushion 210 can push the child's back forward and upward. The pushing portion 215 in this embodiment may also be called a back thickening portion. In other embodiments, the child's back may be propped up by a curved shape of the pushing portion 215; for example, the material thickness remains unchanged, but the pushing portion 215 is curved and bulged to form the raised shape. In this embodiment, the arrangement of the pushing portion 215 can make the child's back more stretched, thereby leading to more stretch between the head and the back, avoiding excessive inward bending of the child's back, and facilitating smooth breathing of the child. It should be noted that in other embodiments, the pushing portion 215 may not be raised, as long as it can push up the child's back, so that the back and head of the child tend to be in the same straight line.

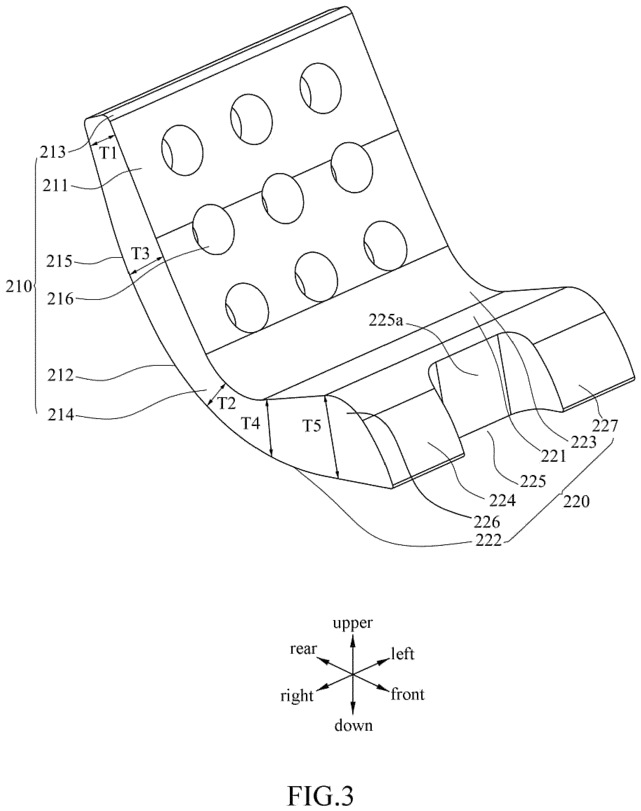

As shown in FIG. 3, the back cushion 210 is also provided with a ventilation hole 216. There may be a plurality of ventilation holes 216 extending from the first surface 211 to the second surface 212 of the back cushion 210. The ventilation holes 216 shown in the figure are circular. However, in other embodiments, the ventilation holes 216 may also be designed in other shapes, such as elliptical, runway-shaped, strip-shaped, square, rectangular, etc.

As shown in FIG. 3, in this embodiment, the back cushion 210 and the seat cushion 220 are integrally made; a first end 223 of the seat cushion 220 and the second end 214 of the back cushion 210 are connected as a whole, and the connection is smooth and curved. In combination with FIG. 5, according to the embodiment shown in the figure, the back cushion 210 and the seat cushion 220, which are integrally made, are arranged at an angle to each other. To achieve optimal riding comfort, the connection between the back cushion 210 and the seat cushion 220 is curved. Certainly, in other embodiments, the back cushion 210 and the seat cushion 220 may also be separately made and combined with each other.

As shown in FIGS. 3 and 5, the seat cushion 220 has the first end 223 and a second end 224 opposite to the first end. The first end 223 of the seat cushion 220 is connected to the second end 214 of the back cushion 210 through an arc-shaped transition, and the second end 224 of the seat cushion 220 extends forward and upward. The seat cushion 220 has a first surface 221 and a second surface 222 opposite to the first surface 221, and the first surface 221 is configured to face the child. As mentioned above, in this embodiment, due to the arc-shaped transition between the back cushion 210 and the seat cushion 220, the first surface 221 of the seat cushion 220 includes an arc segment 221a connected to the second end 214 of the back cushion 210 and a straight segment 221b connected to the arc segment 221a, the straight segment 221b extending substantially straight forward and upward.

The seat cushion 220 also has a third surface 227 at the second end 224 of the seat cushion 220, and the third surface 227 connects the first surface 221 of the seat cushion 210 with the second surface 222 of the seat cushion 210. As shown in FIGS. 3 and 5, the third surface 227 and the first surface 221 are connected to each other through an arc-shaped transition.

The seat cushion 220 also has a blocking portion 226, and the blocking portion 226 can block downward sliding of the sitting child, so that the seat cushion 220 can support the child, help maintain the position of the child's head, and prevent the child from sliding down during sleep or vehicle bumps and hence prevent the child's head from excessively bending toward the back. In this embodiment, the seat cushion 220 is formed as a whole by integral made. In other embodiments, the seat cushion 220 may also include a plurality of separate parts, with the blocking portion 226 molded separately from other parts and connected together with each other to collectively form the seat cushion 220.

As shown in FIGS. 3 and 5, in this embodiment, the blocking portion 226 is located at the second end 224 of the seat cushion 220 and is in the form of a protrusion extending diagonally upward. Referring to FIGS. 3 and 5, the blocking portion 226 is located diagonally above the seat cushion 220, and an outer surface of the blocking portion 226 forms at least a part of the first surface 221 of the seat cushion 220 and forms the third surface 227 of the seat cushion 220. Due to the arc-shaped transition between the first surface 221 and the third surface 227, legs (e.g., lower legs) of the child who is elder or has a larger body size can rest against the third surface 227 for comfortable support. A thickness between the first surface 221 and the second surface 222 of the seat cushion 220 gradually increases from the first end 223 of the seat cushion 220 toward an end adjacent to the third surface 227 of the seat cushion 220.

In this embodiment, the first end 223 of the seat cushion 220 is integrally connected to the second end 214 of the back cushion 210. Referring to FIG. 4, a thickness of the seat cushion 220 at its first end 223, i.e., a thickness between an end (close to the back cushion 210) of the arc segment 221a of the first surface 221 of the seat cushion 220 and the second surface 222 of the seat cushion 220, is the second thickness T2 of the back cushion 210 at its second end 214. A thickness between an end (close to the arc segment 221a) of the straight segment 221b of the first surface 221 of the seat cushion 220 and the second surface 222 of the seat cushion 220 is a fourth thickness T4, which is greater than the second thickness T2. A thickness between the first surface 221 and the second surface 222 of the seat cushion 220 and adjacent to its third surface 227 is a fifth thickness T5, which is greater than the fourth thickness T4. In this embodiment, a maximum thickness of the seat cushion 220 is the fifth thickness T5 mentioned above.

As shown in FIG. 5, a thickness between the straight segment 221b of the first surface 221 and the second surface 222 also gradually increases from an end close to the back cushion 210 to an end close to the third surface 227. In this embodiment, the second surface 222 of the seat cushion 210 extends forward and upward beyond the first surface 221, and the third surface 227 forms an inclined surface with an arc-shaped transition and connects the first surface 221 with the second surface 222.

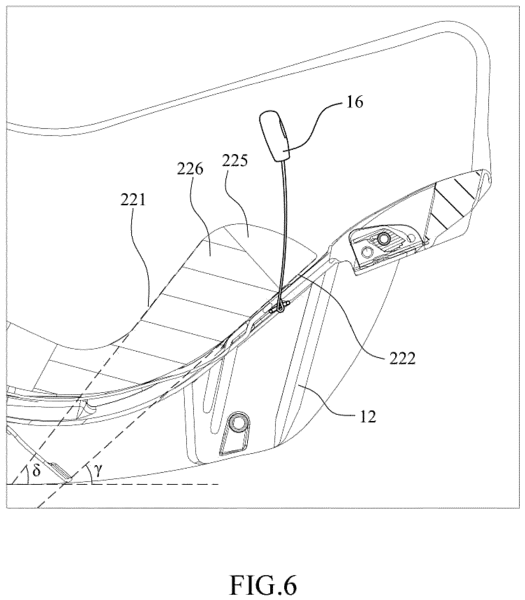

Referring to FIGS. 5 and 6, FIG. 6 is a partially side view of the seat cushion 220 according to the present disclosure. In order to comply with ergonomics and provide a more comfortable riding experience, and meanwhile to realize the positioning and blocking function of the blocking portion 226, an angle between a connection line of the first surface 221 of the seat cushion 220 (i.e., a part of the outer surface of the blocking portion 226 in this embodiment) and a connection line of the second surface 222 of the seat cushion 220 is a first angle β, which is not less than 8° and not greater than 25° (i.e., 8° ≤ β ≤ 25°), according to some embodiments, β=11°. An angle between the connection line of the first surface 221 of the seat cushion 220 (i.e., a part of the outer surface of the blocking portion 226 in this embodiment) and a connection line of the first surface 211 of the back cushion 210 is a second angle α, which is not less than 101° and not greater than 110° (i.e., 101° ≤ α ≤ 110°), according to some embodiments, α=105°. When a bottom of the seat body 12 is supported by a horizontal plane, an angle between the second surface 222 of the seat cushion 220 and the horizontal plane is a third angle γ, which is not less than 25° and not greater than 55° (i.e., 25° ≤ γ ≤ 55°), according to some embodiments, γ=40°. The above settings of the blocking portion 226 can also provide better support for the child thereon, improving the comfort, stability, and safety of the ride.

As shown in FIG. 6, when the bottom of the seat body 12 is supported by the horizontal plane, an angle between the first surface 221 of the seat cushion 220 and the horizontal plane is a fourth angle δ, which is not less than 33° and not greater than 80° (i.e., 33° ≤ δ ≤ 80°). More specifically, the fourth angle δ is not less than 30° and not greater than 70° (i.e., 30° ≤ δ ≤ 70°), according to some embodiments, δ=51°.

It should be noted that in this embodiment, the first surface 221 of the seat cushion 220 and the second surface 222 of the seat cushion 220 both have an arc-shaped transition; the first angle β may be defined by an extension line (i.e., the connection line) of the first surface 221 of the seat cushion 220 and an extension line (i.e., the connection line) of the second surface 222 of the seat cushion 220; the second angle α may be defined by the extension line (i.e., the connection line) of the first surface 221 of the seat cushion 220 and an extension line (i.e., the connection line) of the first surface 211 of the back cushion 210. As shown in FIG. 6, the bottom of the seat body 12 is arc-shaped. When the bottom of the seat body 12 is supported by the horizontal plane, the horizontal plane is substantially tangent to the bottom of the seat body 12, and the third angle γ may be defined by the extension line of the second surface 222 of the seat cushion 220 and a tangent line of the bottom of the seat body 12. In other embodiments, the back cushion 210 and the seat cushion 220 may not be connected through any arc-shaped transition but rather may be directly and straightly connected, forming a clear angle origin, in which case the first angle β may be directly obtained. Similarly, in other embodiments, the second angle α, the third angle γ, and the fourth angle δ may be directly defined without need for extension lines, based on specific shape changes of the seat cushion structure 200 and the bottom of the seat body 12.

It should be noted that in this embodiment, the blocking portion 226 is substantially distributed in a front area of the first surface 221 of the seat cushion 220, such that the outer surface of the blocking portion 226 forms a part of the first surface 221 of the seat cushion 220 (e.g., the straight segment 221b of the first surface 221 of the seat cushion 220) and the third surface 227. In other embodiments, the outer surface of the blocking portion 226 may form the entire first surface 221 of the seat cushion 220 and/or the third surface 227 of the seat cushion 220.

As shown in FIGS. 3 and 5, the second end 224 of the seat cushion 220 is provided with an avoidance portion 225 to avoid the crotch belt assembly 16 arranged on a seating portion of the seat body 12. The avoidance portion 225 may be in the form of an avoidance notch, recessed inward from the third surface 227 of the seat cushion 220, as shown in FIGS. 3 and 5. Certainly, the avoidance portion 225 may also be in the form of an avoidance hole.

Since the crotch belt assembly 16 passes through the avoidance portion 225, the crotch belt assembly 16 can limit and block the seat cushion structure 200, preventing it from sliding down. As a result, cooperation between the avoidance portion 225 and the crotch belt assembly 16 enable the seat cushion structure 200 to better support the child and reduce the risk of downward slide of the child.

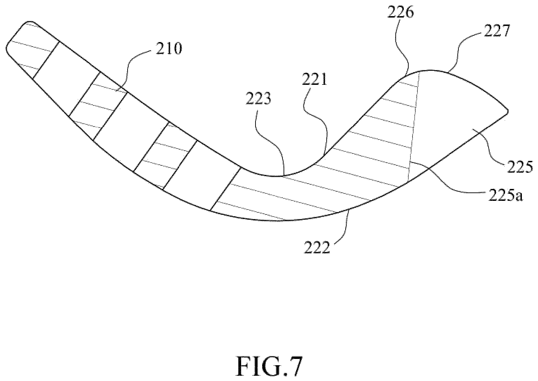

In the embodiment as shown in FIG. 3, the avoidance portion 225 is an avoidance notch, and an avoidance portion limiting surface 225a is substantially perpendicular to the second surface 222 of the seat cushion 220. As shown in FIG. 7, which is a partially sectional view of another embodiment of the avoidance portion 225 according to the present disclosure, the avoidance portion limiting surface 225a in this embodiment is inclined downward and inward (i.e., inclined from front to rear and from top to bottom). When the crotch belt abuts against the avoidance portion limiting surface 225a, a direction of force exerted by the crotch belt on the avoidance portion limiting surface 225a can tend to be further toward the headrest 100, which facilitates support for the seat cushion structure 200 and prevents the seat cushion structure 200 from sliding down.

The headrest 100 and the seat cushion structure 200 as described above can provide overall support for the child's body, allowing the child's back and head to stretch relatively (i.e., the back and the head tend to stretch in a straight line, instead of the head bending excessively toward the back), and ensuring smooth breathing of the child. In this embodiment, as shown in FIG. 2, the thickness of the back cushion 210 at the first end 213 is the first thickness T1, and a thickness of the headrest 100 at the transition portion 122 is a sixth thickness T6, in which the first thickness T1 is greater than the sixth thickness T6. Consequently, even if the child's head is located at a lower position of the headrest 100, the child's back can still be supported upward relative to the head. When the child's back is supported upward, the head is driven to stretch away from the back, which in turn allows the child's head resting against the headrest 100 and the child's back resting against the back cushion 210 to be substantially in the same straight line, with a smooth transition between the head and the back, reducing the suffocation risk of the child. Further, the first thickness T1 is smaller than the fifth thickness T5 mentioned above (as shown in FIG. 4).

It should be noted that the thickness at each position of the seat cushion structure 200 described above is based on a direction of a support force provided by the seat cushion structure 200 at that position as a thickness direction. Hence, the thickness direction at each position will vary when the shape of the seat cushion structure 200 is curved. For example, thickness directions of the first thickness T1 and the second thickness T2 are not parallel in FIGS. 3, 4, and 5.

It should be noted that in other embodiments, regardless of how the thickness of the seat cushion 220 is set and regardless of whether there is a blocking portion in the form of a protrusion, when the seat cushion structure 200 cooperates with the seat body 12 in such a way as to enable the first surface 221 of the seat cushion 220 to be inclined at a certain angle with respect to the horizontal plane of the bottom of the seat body 12, the child sits on the seat cushion 220 and is supported by the first surface 221 of a certain inclination, which can also serve to block the child from sliding down. For example, an inner surface of the seating portion of the seat body (i.e., a surface in contact with the second surface of the seat cushion) has an inwardly bulged portion, and the seat cushion structure 200 is arranged in the seat body 12. When the bottom of the seat body 12 is supported by the horizontal plane, the angle between the first surface 221 of the seat cushion 220 and the horizontal plane is the aforementioned fourth angle δ, which is not less than 33° and not greater than 80° (i.e., 33° ≤ δ ≤ 80°).

It should also be noted that in this embodiment, the headrest 100 and the seat cushion structure 200 are separately molded; the headrest 100 is connected to the backrest of the child safety seat 10 and is adjustable in position relative to the backrest; and the seat cushion structure 200 is separately placed in the seat body 12. In other embodiments, the headrest 100 and the seat cushion structure 200 may both be detachable structures independent of the seat body 12. For example, the headrest 100 and the seat cushion structure 200 may be accommodated in different spaces of a same outer cloth cover, allowing the support structure 20 to be detachably placed inside the seat body 12. Alternatively, the headrest 100 and the seat cushion structure 200 may be separately accommodated in different outer cloth covers, and then connected together through structures such as a Velcro, a snap fastener, or a zipper. Alternatively, the headrest 100 and the seat cushion structure 200 may be integrally molded.

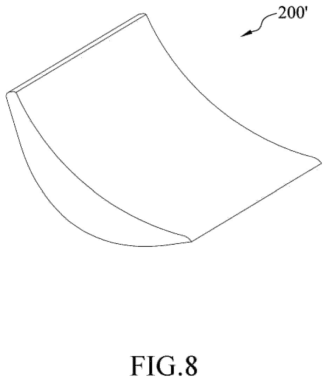

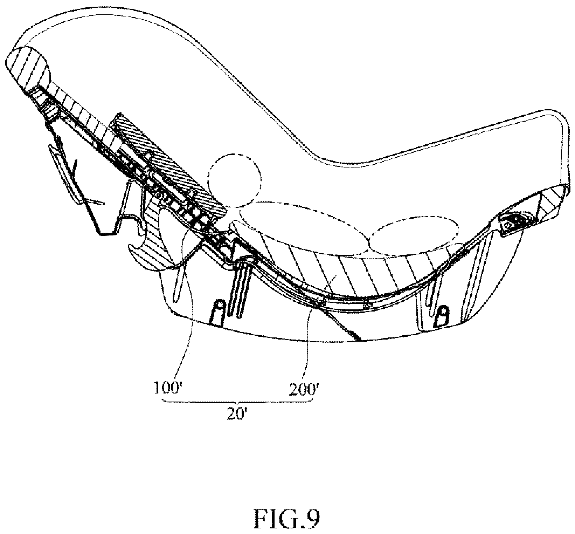

Referring to FIGS. 8 and 9, FIG. 8 is a schematic view of a seat cushion structure 200' according to a comparative embodiment, and FIG. 9 is a schematic view of a support structure 20' according to a comparative embodiment. For the seat cushion structure 200' in this comparative embodiment, the seat cushion structure 200' is not provided with any pushing portion or any blocking portion, and a surface of the seat cushion structure 200' facing the child tends to be smooth as a whole; and the headrest 100' is not provided with any transition portion. Consequently, when the child is sleeping or the child safety seat bumps with the car movement, the child is very easy to slide down, and the child's head also moves down at the same time, so that as shown in FIG. 9, the child's head bends toward the back, which can easily affect breathing smoothness of the child.

On the contrary, when the support structure 20 according to the present disclosure is mounted on the seat body 12 of the child safety seat 10, the headrest 100 can support the child's head, and the seat cushion structure 200 can support the child's back and hip. Meanwhile, the second end 120 of the headrest 100 is provided with the transition portion 122, and the back cushion 210 of the seat cushion structure 200 is provided with the pushing portion 215, so that the support structure 20 overall can better support the child's body, making the head and body tend to stretch, substantially in a straight line, and avoiding the risk of suffocation caused by the head bending toward the back. In addition, the seat cushion 220 of the seat cushion structure 200 is provided with the blocking portion 226, which can limit and block the child, prevent the child from sliding down, and provide more comfortable and safe support for the child sitting thereon. The avoidance portion 225 of the seat cushion 220 of the seat cushion structure 200 can allow the crotch belt assembly 16 of the child safety seat 10 to pass through, in order to position the seat cushion structure 200 and further prevent the child from sliding down, thereby providing safe, comfortable, and reliable support for the child.

It should be noted that when the child lies down and sits normally, the child's back is at a relatively upper position, but when the child slides down, the child's back also slides down to a lower position and has a certain range of movement. In the present disclosure, a distribution range of the pushing portion in the back cushion may be set to correspond to the movement range of the child's back, so that the head and body of the child always tend to stretch (i.e., when the child lies down normally and slides down, the head and body can both tend to stretch), substantially in the straight line. Certainly, in other embodiments, if it can be ensured by other structures that the child breathes smoothly when lying down and sitting normally, the distribution range of the pushing portion in the back cushion in the present disclosure may only correspond to a range where the child's back is after sliding down.

## Claims

1. A seat cushion structure (200), applicable to a seat body (12) of a child safety seat (10), and comprising:
a back cushion (210) configured to support a back of a child, the back cushion (210) having a first surface (211) and a second surface (212) opposite to the first surface (211), the first surface (211) configured to face the child; and
a seat cushion (220) configured to support a hip of the child,
wherein the back cushion (210) is provided with a pushing portion (215), and the pushing portion (215) makes the first surface (211) of the back cushion (210) push the back of the child, allowing the back and the head of the child tend to be in a same straight line; and/or
wherein the seat cushion (220) is provided with a blocking portion (226) configured to block the child from sliding down.

2. The seat cushion structure (200) according to claim 1, wherein the pushing portion (215) is on one of the first surface (211) and the second surface (212) of the back cushion (210), and an outer surface of the pushing portion (215) forms at least a part of the first surface (211) of the back cushion (210) or at least a part of the second surface (212) of the back cushion (210).

3. The seat cushion structure (200) according to claim 1 or 2, wherein the seat cushion (220) is integrally made with the pushing portion (215), and an outer surface of the pushing portion (215) forms at least a part of the second surface (212) of the back cushion (210);
wherein the pushing portion (215) is configured as a protrusion protruding in a direction away from a first surface (221) of the seat cushion (220).

4. The seat cushion structure (200) according to any one of the preceding claims, wherein the back cushion (210) has a first end (213) and a second end (214) along an up-down direction, and the first end (213) of the back cushion (210) is away from the seat cushion (220) relative to the second end (214) of the back cushion (210);
wherein the back cushion (210) has a first thickness (T1) at the first end (213), a second thickness (T2) at the second end (214), and a third thickness (T3) at the pushing portion (215), wherein the third thickness (T3) is greater than the second thickness (T2).

5. The seat cushion structure according to claim 4, wherein the third thickness (T3) is greater than the first thickness (T1).

6. The seat cushion structure (200) according to any one of the preceding claims, wherein the seat cushion (220) has a first end (223) and a second end (224) opposite to the first end (223); wherein the first end (223) of the seat cushion (220) is connected to a second end (214) of the back cushion (210) through an arc-shaped transition; and the second end (224) of the seat cushion extends forward and upward.

7. The seat cushion structure (200) according to any one of the preceding claims, wherein the seat cushion (220) has a first surface (221) and a second surface (222) opposite to the first surface (221), and the first surface (221) of the seat cushion (220) is configured to face the child; and
wherein the first surface (221) of the seat cushion (220) and the second surface (222) of the seat cushion (220) are inclined forward and upward, and a distance between the first surface (221) of the seat cushion (220) and the second surface (222) of the seat cushion (220) gradually increases in a forward and upward direction.

8. The seat cushion structure (200) according to claim 7, wherein a first angle (β) is formed between a connection line of the first surface (221) of the seat cushion (220) and a connection line of the second surface (222) of the seat cushion (220), and the first angle (β) is not less than 8° and not greater than 25°.

9. The seat cushion structure (200) according to any one of the preceding claims, wherein the seat cushion (220) has a first surface (221) and a second surface (222) opposite to the first surface (221), and the first surface (221) of the seat cushion (220) is configured to face the child; and
a second angle (α) is formed between a connection line of the first surface (211) of the back cushion (210) and a connection line of the first surface (221) of the seat cushion (220), and the second angle (α) is not less than 101° and not greater than 110°.

10. The seat cushion structure (200) according to any one of the preceding claims, wherein the seat cushion (220) also has a third surface (227) at a second end (224) of the seat cushion (220), and the third surface (227) connects a first surface (221) of the seat cushion (220) with a second surface (222) of the seat cushion (220),
wherein the blocking portion (226) is in the form of a protrusion extending forward and upward, and an outer surface of the blocking portion (226) forms at least a part of the first surface (221) of the seat cushion (220) and forms the third surface (227) of the seat cushion (220).

11. The seat cushion structure (200) according to any one of the preceding claims, wherein the seat cushion (220) also has a third surface (227) at the second end (224) of the seat cushion (220), and the third surface (227) connects a first surface (221) of the seat cushion (220) with a second surface (222) of the seat cushion (220),
wherein a thickness of the back cushion (210) at the second end (214) is a second thickness (T2), and a thickness between an end of the straight segment (221b) close to the arc segment (221a) and a second surface (222) of the seat cushion (220) is a fourth thickness (T4), which is greater than the second thickness (T2).

12. The seat cushion structure (200) according to claim 11, wherein a thickness between the first surface (221) of the seat cushion (220) and the second surface (222) of the seat cushion (220) and adjacent to the third surface (227) of the seat cushion (220) is a fifth thickness (T5), which is greater than the fourth thickness (T4).

13. A child safety seat (10), comprising a seat body (12) and a support structure arranged on the seat body (12), wherein the support structure comprises:
a headrest (100) configured to support a head of a child; and
the seat cushion structure (200) according to any one of claims 1 to 12.

14. The child safety seat (10) according to claim 13, wherein the headrest (100) has a first end (110) and a second end (120) in an upper and down direction, and the first end (110) of the headrest (100) is away from the seat cushion structure (200) relative to the second end (120) of the headrest (100), wherein an upper protrusion (112) is provided at the first end (110) of the headrest (100); and/or a side protrusion (113) is provided at each of left and right sides of the headrest (100).

15. The child safety seat (10) according to claim 13 or 14, wherein, when a bottom of the seat body (12) is placed on a horizontal plane, a third angle (γ) is formed between a second surface (222) of the seat cushion (220) and the horizontal plane and is not less than 25° and not greater than 55°.
